(19) Europäisches Patentamt / European Patent Office / Office européen des brevets

(11) **EP 3 884 635 B1**

(12) **EUROPEAN PATENT SPECIFICATION**

(45) Date of publication and mention
of the grant of the patent:
**27.12.2023 Bulletin 2023/52**

(21) Application number: **19801388.0**

(22) Date of filing: **15.11.2019**

(51) International Patent Classification (IPC):
**H04W 12/06** *(2021.01)*    **H04L 9/40** *(2022.01)*
*H04W 12/00* *(2021.01)*    *H04W 4/08* *(2009.01)*
*H04W 4/70* *(2018.01)*    *H04W 88/16* *(2009.01)*

(52) Cooperative Patent Classification (CPC):
**H04L 63/104; H04W 12/06;** H04W 4/08;
H04W 4/70; H04W 12/009; H04W 88/16

(86) International application number:
**PCT/EP2019/081544**

(87) International publication number:
**WO 2020/104336 (28.05.2020 Gazette 2020/22)**

(54) **A METHOD AND APPARATUSES FOR AUTHENTICATING A GROUP OF WIRELESS COMMUNICATION DEVICES**

VERFAHREN UND VORRICHTUNGEN ZUR AUTHENTIFIZIERUNG EINER GRUPPE VON DRAHTLOSEN KOMMUNIKATIONSGERÄTEN

PROCEDE ET APPAREILS D'AUTHENTIFICATION D'UN GROUPE DE DISPOSITIFS DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2018 EP 18306564**

(43) Date of publication of application:
**29.09.2021 Bulletin 2021/39**

(73) Proprietor: **Thales Dis France SAS
92190 Meudon (FR)**

(72) Inventor: **PHAN, Ly Thanh
92190 Meudon (FR)**

(74) Representative: **Lotaut, Yacine Diaw
Thales Dis France SAS
Intellectual Property Department
6, rue de la Verrerie
92190 Meudon (FR)**

(56) References cited:
**WO-A1-2016/171618    US-A1- 2013 291 071
US-A1- 2018 115 539**

**Description**

TECHNICAL FIELD

The present invention relates to a method and apparatuses to authenticate a group of wireless communication devices. It is applicable to wireless communication systems and to the Internet of Things.

BACKGROUND OF THE INVENTION

According to the Recommendation ITU-T Y.2060 provided by the International Telecommunication institute, the Internet of things (IoT) is defined as a global infrastructure for the information society, enabling advanced services by interconnecting physical and virtual things based on existing and evolving interoperable information and communication technologies. A thing is an object of the physical world (physical things) or the information world (virtual things), which is capable of being identified and integrated into communication networks. At present, IoT is generally applied in fields such as security surveillance, automatic vending machines, public traffic systems, vehicle monitoring and management, industry process automatization, motor machineries, city informationalization.

In next generation wireless communication networks massive deployments of so called IoT devices are one of the key business drivers for the telecom operators.

In this description, an IoT device is referred as a wireless communication device WCD. A wireless communication device WCD is a piece of equipment with communication capabilities and optionally capacity of data capture, sensing, data storage and/or data processing. A wireless communication device WCD comprises for example a wireless communication module also called Machine Type Communication (MTC) module allowing transmission of data from one wireless communication device WCD device to a network or exchange of data between machines through UMTS/HSDPA, CDMA/EVDO, LTE, 5G, LoRa or other networks.

One of the problem raised by the massive deployment of wireless communication devices WCDs is the radio resources needed for authentication. Authenticating each of the wireless communication devices WCDs individually generally involves a large bandwidth consumption in the wireless communication network. Further, long distance wireless communications for enabling this initial authentication also involves significant energy needs with a strong impact on the device battery consumption. As a consequence, this constitutes a material overhead relative to the value of such type of device.

Therefore, it would be advantageous to have an improved method, system and apparatus allowing the registration of a plurality of wireless communication devices and subscribers while minimizing the needed signaling messages.

Several technologies belonging to the state of the art aims at addressing this problem.

According to a first existing technology, each message that is transmitted to the network by a wireless communication device WCD is authenticated individually. This solution is implemented by SigFox and LoRa Low Power and Wide Area Networks (LPWANs). A significant drawback is that an intrinsic overhead is introduced in each message and another drawback resides in the way keys are distributed for enabling this authentication method.

According to a second existing technology, group authentication can be carried out by a gateway device capable of authenticating individually the wireless communication devices WCD under its coverage. In that case, the wireless network delegates the authentication trust to that gateway device for performing the authentication as well as for keeping the secret secure and distributing the network resources to the local devices. The wireless network cannot be sure however that the gateway has correctly performed the authentications of the devices nor kept secrets the devices keys.

A document US2018/115539 A1 discloses a system and method for massive lot group authentication. A document WO 2016/171618 A1 discloses a method for aggregate authentication protocol in M2M communication. A document US 2013/291071 A1 discloses a method and apparatus for authenticating a communication device.

SUMMARY OF THE INVENTION

The invention relates to a gateway relaying node for the authentication a group comprising a plurality of wireless communication devices localized in the vicinity of said node and requesting access to a wireless communication network.

The invention is disclosed in the independent claims. Preferred embodiments of the invention are described in the dependent claims.

BRIEF DESCRIPTION OF THE DRAWINGS

Additional features and advantages of the invention will be more clearly understandable after reading a detailed description of several embodiments of the invention, given as indicative and non-limitative examples, in conjunction with the following drawings:

- Figure 1 provides an example of wireless telecommunication system implementing a mechanism to optimize the authentication of groups of wireless communication devices;
- Figure 2 is a sequence diagram illustrating a mechanism for optimizing the registration of a plurality of wireless communication devices by a 5G network;
- Figure 3 provides an example of mechanism allowing the generation of a synthetic authentication vector to be used for a plurality of N requesting wireless communication devices;
- Figure 4 provides an example showing how an AUTHENTICATE command comprising a synthetic authentication vector can be generated and transmitted by the authentication server;
- Figure 5 is a flowchart providing an example of the processing performed by a given requesting wireless communication device upon reception of a local AUTHENTICATE command;
- Figure 6 is a flowchart providing an example of processing performed by a gateway relaying node GRN;
- Figure 7 is a flowchart providing an example of processing performed by an Access and Mobility management Function AMF server;
- Figure 8 is a flowchart providing an example of processing performed by the home authentication server AUSF.

DETAILED DESCRIPTION

The invention relates to a probabilistic mechanism allowing to reduce the number of long distance authentications by individual wireless communication devices.

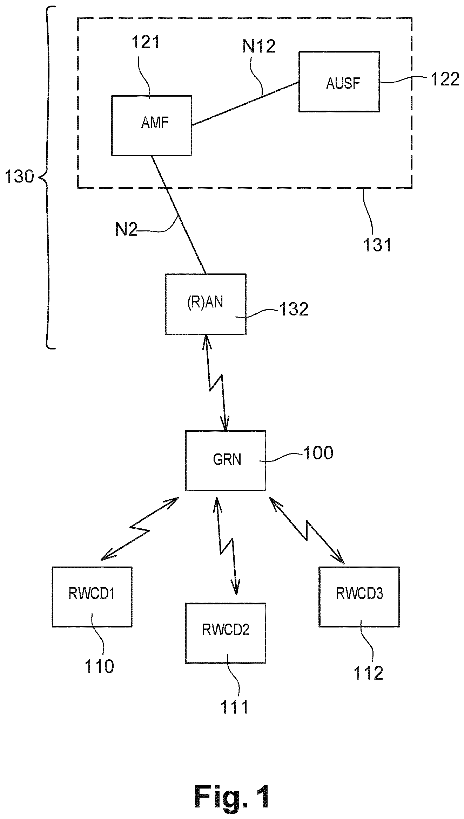

**Figure 1** provides an example of wireless telecommunication system implementing a mechanism to optimize the authentication of groups of wireless communication devices.

According to this simplified example, three wireless communication devices 110-112 are requesting access to a wireless communication network 130. For simplification purposes, the wireless communication network is designated as the "network" in the sequel.

The wireless communication devices need to be authenticated by the network. For that purpose, a local gateway called Gateway-Relaying Node GRN 100 is used for aggregating signalling messages exchanged between the wireless communication devices 110-112 and the network 130 during the registration process. In the context of this invention, the word registration refers to a mutual authentication performed by the network and a wireless communication device and possibly other tasks such as maintaining a database by the network of correctly authenticated wireless communication devices.

The Gateway-Relaying Node 100 can be implemented as a server with wireless communication capabilities for communicating both with the wireless communication devices 110-112 in its vicinity as well as with the network 130. According to another embodiment, the Gateway-Relaying Node 100 can be a wireless communication device of the same type than those 110-112 requesting to be registered by the network, by a WIFI hotspot, by a Home (e)NodeB also known as a femtocell, a smallcell, a picocell, or embedded in a base station (gNB, eNB).

In this example, the wireless communication network 130 is a simplified representation of a 5G wireless telecommunication systems as described in the 3GPP technical specification TS 23.501, version 15.0.0. The skilled person would nevertheless understand that the described invention can also be applied to other types of wireless telecommunication systems, for example evolutions of existing 4G systems or LPWANs. Further, the skilled person will also appreciate that the invention can also be applied for wireless communication devices beyond IoT use cases. For example, the invention is also applicable to wireless communication devices such as smartphones, tablets or even laptop computers.

The network 130 comprises a 5G Access Network 132, that is to say an access network comprising a NG-RAN and/or non-3GPP Access Network connecting to a 5G Core Network.

A core network 131 is also part of the wireless communication network 130 and is represented is also comprises a core network which is there represented in a simplified way as it only comprises an Access and Mobility management Function AMF 121 and a Authentication Server Function AUSF 122. N2 refers to the reference point between the (R)AN 132 and the AMF 121 and N12 refers to the reference point between AMF 121 and the AUSF 122.

According to one aspect of the invention, authentication vectors are generated by the authentication server AUSF 122 for a plurality of wireless communication devices 110-112 localized in the vicinity of the local gateway 100.

These authentication vectors are sampled and then aggregated into a so-called synthetic authentication vector (SAV) transmitted by the authentication server 122 to the Gateway-Relaying Node 100 through the AMF 121.

The Gateway-Relaying Node 100 is configured to generate locally authentication vectors for each individual wireless communication device 110-112 using the synthetic authentication vector (SAV).

The requesting wireless communication devices 110-112 are adapted to check the validity of an authentication challenge received from the network, but only on a sample of the AUTN token generated for them. It is further adapted to send response messages to the local gateway 100.

The Gateway-Relaying Node 100 is also adapted to generate a synthetic authentication response message based on the local device authentication responses received from the requesting communication devices 110-112.

The authentication server AUSF 122 then considers the requesting wireless communication devices as authenticated based on the synthetic authentication response received from the local Gateway Relaying Node 100.

The authentication server AUSF 122 can estimate a level of confidence for each of the requesting wireless communication devices taking into account the increasing number of authentications performed over time for each of them. Indeed, this level of confidence increases with successive successful authentications of the same group of devices.

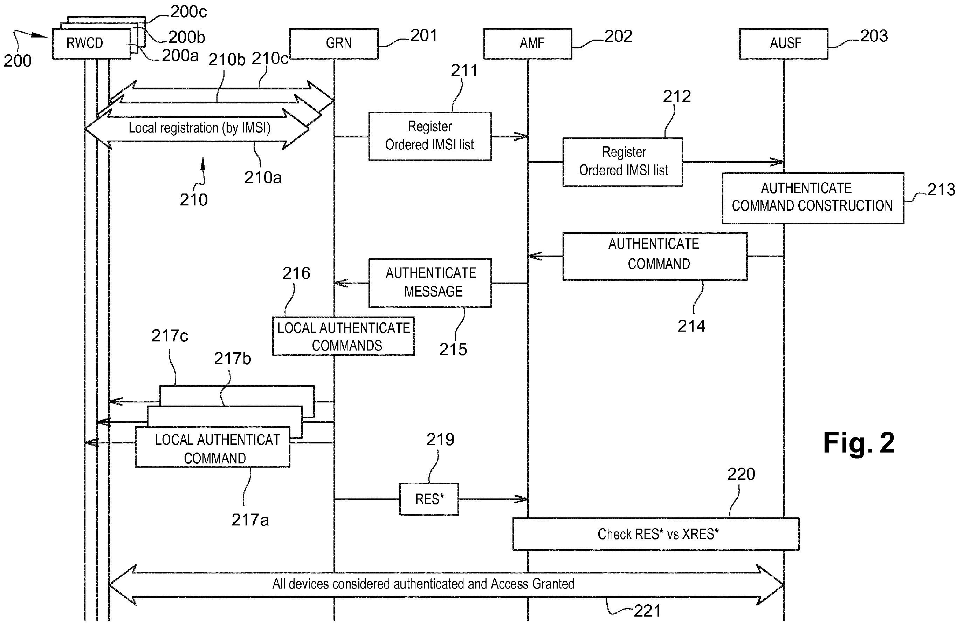

**Figure 2** is a sequence diagram illustrating a mechanism for optimizing the registration of a plurality of wireless communication devices by a 5G network.

The described mechanism is based on the use of a Gateway-Relaying Node 201 capable of concentrating multiple registration requests from a plurality of requesting wireless communication devices 200. According to this example, the registration is performed for three requesting wireless communication devices 200a, 200b, 200c.

According to an aspect of the invention, the wireless communication devices are capable of local communications, for example device to device communications using wireless technologies such as WiFi or BlueTooth.

Additionally, the wireless communication devices have capabilities of registering to a long range radio network, for example 2G, 3G, 4G or 5G networks. According to an example, they can use for instance an IMSI/Ki pair securely stored preferably in a tamper resistant secure environment such as an embedded eUICC, a secure element or a secure enclave.

One or more of such wireless communication devices is capable of communication with the long range radio network. This wireless communication device act as the Gateway-Relaying Node (GRN). However, the invention is also application to a Gateway-Relaying Node (GRN) that is implemented as a server comprising wireless capabilities.

Another actor in this sequence diagram is a serving AMF 202 which is capable of performing on behalf of a home AUSF 203 authentication of the requesting wireless communication devices 200.

The home AUSF 203 is capable of generating a set of N+1 authentication vectors for the N+1 requesting wireless communication devices 200.

The authentication procedures described thanks to this sequence diagram is an improvement of the well-known Authentication and Key Agreement (AKA) protocol. Notations that are used in the following description are referring to notions that are well known to those skilled in the art. For additional information, one can refer for example to the 3GPP specification TS 33.501 describing AKA for 5G, version 15.2.0, section 6.1.3.2 can be carried out.

Therefore, the following notations are used in the sequel:

XRES refers to an expected response;
HRES refers to a hash expected response;
AUTN refers to an authentication token;
SQN refers to a sequence number.

At first, the requesting wireless communication devices 200 discover the GRN 201 and establish individual, that is to say one-to-one, or a group local communication with the GRN 201.

Then, each of the requesting wireless communication devices 200 sends a local registration message 210a, 210b, 210c to the GRN 201 comprising a subscriber identifier. This subscriber identifiers can be for example an International Mobile Subscriber Identifier (IMSI).

The GRN 201 then registers to the AMF 202 through a radio access network, for example a LTE or 5G radio access network (RAN). For that purpose, a registration message 211 comprising an ordered list of IMSIs is transmitted to the serving AMF 202. According to an embodiment, the registration message 211 also comprises the GRN's IMSI.

According to an example, the ordered list of IMSIs can be compressed. This compression can be enabled for example by transmitting only the Mobile Subscriber Identification Number (MSIN) part of the IMSI in case the Mobile Country Code (MCC) and the Mobile Network Code (MNC) fields are the same for these requesting wireless communication devices 200. The skilled person can also consider other methods belonging to the prior art and allowing to compress this ordered list of IMSI. Further, the ordered list of IMSI can also be encrypted with the Home network operator public key for privacy purposes.

The AMF 202 then forwards 212 the registration message content to the AUSF 203 of the home PLMN. For that purpose, it can use the clear text part of the registration message containing the Home Public Land Mobile Network (PLMN) Identity and Routing Information.

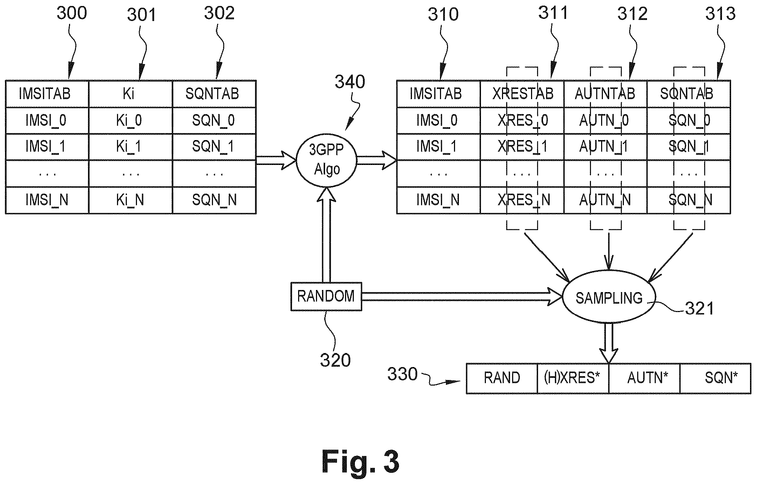

**Figure 3** provides an example of mechanism allowing the generation of a synthetic authentication vector to be used for a plurality of N requesting wireless communication devices.

After having received the ordered IMSI list 212, the authentication server AUSF 203 generates 213 a synthetic authentication vector that will be used for authenticating the whole set 200 of requesting wireless communication devices.

For that purpose, the authentication server 203:

- decrypts the encrypted ordered list of IMSIs;
- decompresses the ordered list of IMSIs;
- finds the Ki keys 301 and sequence numbers 302 for each IMSI in the ordered list of IMSIs 300;
- generates one single random Challenge (RAND).

For the N+1 requesting wireless communication devices respectively associated to the N+1 IMSI 310, the authentication server AUSF 203 generates an expected Results table XRESTAB 311 and AUTN cryptogram table AUTNTAB 312 for the challenge RAND 320 and for the Ki Key and Sequence number SQN associated to each IMSI of the ordered list of IMSIs. It is to be noted that in the example illustrated with Figure 2, N is taken as equal to two. It is to be understood that this is for exemplary purpose only and that N can be chosen equal to any integer greater or equal to zero.

$$XRESTAB = [XRES\_0, XRES\_1, …, XRES\_N]$$

$$AUTNTAB = [AUTN\_0, AUTN\_1, …, AUTN\_N]$$

The expected result XRES_i and the authentication token AUTN_i for the i-th requesting wireless communication device are determined using well-known algorithms 340 noted Authentication-Algo(), for example the ones described in 3GPP TS 33.501.

This can be expressed as follow:

$$XRES\_i, AUTN\_i = Authentication\text{-}Algo(KI\_i, RAND, SQN\_i)$$

Then, the synthetic authentication vector can be determined.

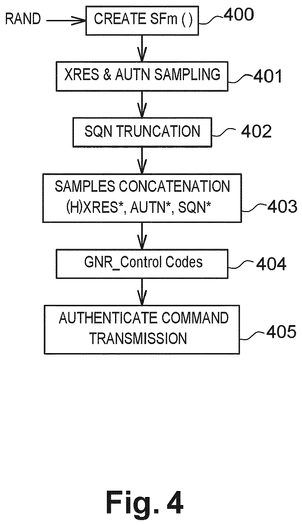

**Figure 4** provides an example showing how an AUTHENTICATE command comprising a synthetic authentication vector can be generated and transmitted by the authentication server.

The generation 213 of the AUTHENTICATE command can be implemented using steps 400-405.

At first, a Sampling Function SFm is generated 400 using the random number RAND as an input parameter.

The principle to be followed for choosing a given sampling function SFm is that there should be preferably a unique function for each possible RAND value. A given SFm function will extract for the i-th requesting wireless communication device a sample of the bits composing XRES_i and a sample of the bits composing AUTN_i.

For example, the sampling function SFm can be used 401 to respectively extract P and Q bits of XRES_i of the XRESTAB table 311 and of AUTN_i of the AUTNTAB table 312, for all i.

For instance, for a given RAND value 320, the SFm function, can choose bit-2 to bit-6 of each of the XRES_i of XRESTAB 311 and bit-8 to bit-10 of each of the AUTN_i of AUTNTAB 312.

According to an example, the AUSF 203 server further extract a number S of the near least significant bits of the sequence numbers SQN_i of the SQNTAB table 313. This can be for example the four near least significant bits of each SQN_i. For instance if the validity window is 32 and bit 1 is the least significant bit, then one could choose to use bit 5 to bit 8 for SQN_i, as lesser significant bits to bit 5 would be a priori within the validity window and would not provide useful information.

Then, the samples obtained from the XRES_i, AUTN_i and SQN_i values provided for the N+1 requesting communication devices are respectively concatenated 403 to form XRES*, AUTN* and SQN*.

A synthetic authentication vector 330 can then be constructed. This synthetic authentication vector comprises preferably RAND, HXRES*, AUTN* and SQN*, whereas HXRES* is a hashed value of XRES*.

According to an example, the sampling step 321 can further extract 404 K bits from the sampled bits of the expected Results table. This can be part of the SFm function or defined in another function SFm' applied in parallel with SFm.

These K bits can be for example bit-3 and bit-4 of the already extracted bits from AUTN_i and XRES i to form N+1 codes of four bits each which are then concatenated to form a control code named GRN-ControlCodes. This control code can then be used by the GRN to perform a pre-authentication of the requesting wireless communication devices as detailed later in this description.

Then, an AUTHENTICATE command comprising the synthetic authentication vector 330, the GRN IMSI and possibly GRN_ControlCodes can be constructed and transmitted 214, 405 to the serving AMF 202.

Note that in this example, the synthetic authentication vector is entirely transmitted to the serving AMF 202, and then, as this is described below, a part of the synthetic authentication vector is transmitted to the Gateway-Relaying Node. Indeed, the AMF 202 memorizes the sampled expected results HXRES* and transmit AUTN*, SQN* and RAND to the Gateway-Relaying Node (201). This is because in this embodiment the AMF is responsible of comparing HXRES* with hashed value of RES* generated by the GRN thanks to the feedback messages provided by the requesting wireless communication devices of the group. However, those skilled in the art will appreciate that other embodiments, even if not detailed in this specification, can be considered in the context of this invention. For example, the synthetic authentication vector can be entirely transmitted by the serving AMF 202 to the GRN 201 and the GRN 201 can be in that case responsible for comparing the hashed value of RES* with HXRES*.

The serving AMF 202 then receives the AUTHENTICATE command 214 from the home AUSF 203. Then, the serving AMF 202 can be configured to store HXRES* and the IMSI of the GRN 201. The serving AMF 202 can be further configured to forward the RAND, SQN*, AUTN* and optionally GRN_ ControlCodes in an AUTHENTICATE message 215 to the GRN 201.

The GRN 201 upon reception of the AUTHENTICATE command can be configured to store RAND and GRN_ControlCodes. It can be also configured to generate 216 N+1 Local AUTHENTICATE Command (LAC).

According to an example, a Local AUTHENTICATE Command for the i-th requesting wireless communication device comprises:

- the random number RAND, which is common for all the N+1 requesting wireless communication devices 200;
- the bits corresponding to the one extracted on SQN_i for the i-th wireless communication device by the AUSF server 203 using the SFm function and noted SQN_i**;
- the bits corresponding to the one extracted on AUTN_i for the i-th wireless communication device by the AUSF server 203 using the SFm function and noted AUTN i**.

Said differently, SQN_i** and AUTN_i** are the bits of SQN* and AUTHN* that are associated to the i-th requesting wireless communication device.

The N+1 Local AUTHENTICATE Commands 217a, 217b, 217c are then transmitted by the GRN 201 to each of the requesting wireless communication device 200a, 200b, 200c, a given local AUTHENTICATE command being associated to the IMSI a given requesting wireless communication device.

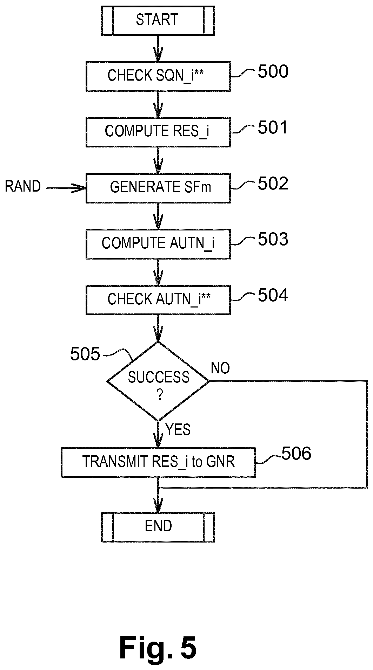

**Figure 5** is a flowchart providing an example of the processing performed by a given requesting wireless communication device upon reception of a local AUTHENTICATE command.

Upon reception of the Local AUTHENTICATE Command, each of the requesting wireless communication devices 200a, 200b, 200c is configured to:

- check 500 that the SQN_i** bits corresponding to the near least significant bits of expected SQN value are within a validity window, as this the case in AKA prior art protocols, but the i-th requesting wireless communication device assumes that the higher significant bits and lesser significant bits which are not received in SQN_i** are correct;
- compute 501 a result RES_i based on its own secret key Ki, the received RAND and a reconstructed version of the SQN number, this reconstructed version being generated by taking SQN_i** bits as the near least significant bits and the higher significant bits from the SQN counter maintained internally by the i-th requesting wireless communication device or embedded in an authentication token installed in said device, and assuming the lesser significant bits are set to a default value e.g. lesser significant bits are zeros;
- generate 502 the sampling function SFm using the received RAND in the same manner than the AUSF 203 generated it;
- compute 503 AUTN_i and apply the SFm function to extract a set of bits for verifying 504 AUTN_i** bits;
- if successful 505, the device transmits 506 the computed RES_i value to the GRN 201.

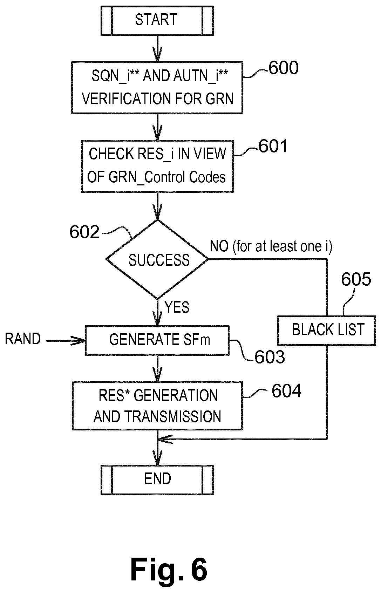

**Figure 6** is a flowchart providing an example of processing performed by a gateway relaying node.

The GRN 202 can perform 600 the same type verification and computation for the SQN_i** and AUTN_i** bits corresponding to its IMSI.

Then, upon reception of the RES_i value from the i-th requesting wireless communication device, the following steps can be carried out:

- verify 601 that the bits of the received RES_i sampled using SFm' are equal to the corresponding bits of GRN_ ControlCodes;
- if successful 602, the GRN assumes that the requesting wireless communication device is valid. In that case,
- the GRN server stores RES_i;
- generate 603 the sampling function SFm based on the RAND value;
- once, all the RES_i of all N+1 requesting wireless communication devices are received and verified, the GRN 201 extracts 604 from the ordered list of the received RES_i, which can be ordered as the initially ordered list of IMSIs, the bits to form RES* using SFm and send it 219, to the serving AMF 202.

If the verification 602 of the sampled bits of the received RES_i are not equal to the corresponding bits of GRN_ControlCodes for at least one of the N+1 requesting wireless communication devices, an incorrect RES_i value is detected. In that case, the failing wireless communication device can be black listed 605. A new registration attempt can then be carried out, but only with the successfully checked devices. This means that a new ordered IMSI without the IMSI used by the failing wireless communication device is transmitted by the GRN to the AMF for relaunching the registration process for this new group of requesting wireless communication devices.

It is to be noted that the GRN_ControlCodes element is optional, and has the advantage of allowing the GRN 201 to determine locally which devices would fail the authentication procedure prior to sending the authentication response to the AMF and AUSF servers. This also allows the GRN 201 to re-initiate a new authentication procedure with only those devices that were successfully locally verified.

The GRN can perform a new registration attempt with failed devices to eliminate potential false negative tests.

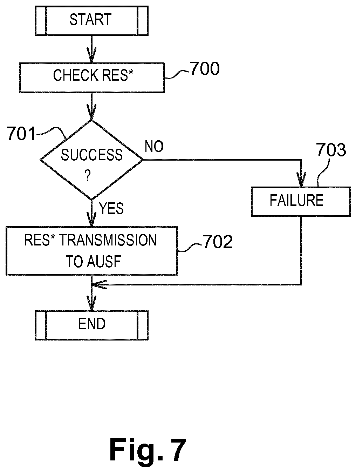

**Figure 7** is a flowchart providing an example of processing performed by an Access and Mobility management Function AMF server.

Once RES* has been received 219 by the AMF 202, it is checked 700 that its hashed value is equal to HXRES*. If 701 successful, RES* is transmitted 702 to the home AUSF 203.

If the AMF detects a failure 703, the bulk authentication attempt is considered as having failed.

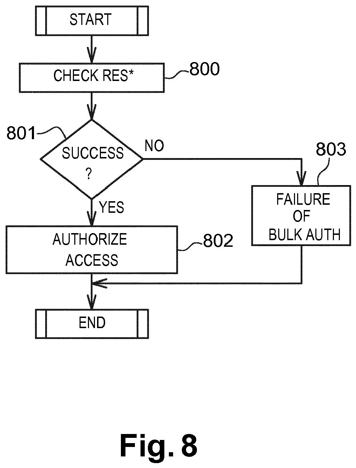

**Figure 8** is a flowchart providing an example of processing performed by the home authentication server AUSF.

Upon reception of RES*, the AUSF checks 800 that it is equal to XRES*. If this verification is successful, the N+1 requesting wireless communication devices of the ordered IMSI list are considered as correctly authenticated and the access to the network is authorized for these devices.

If the home AUSF detect an authentication failure, the bulk authentication attempt is considered as having failed 803.

It is to be noted that the devices of the group are called requesting wireless communication devices. The word "requested" has been used for exemplary purpose. Indeed, the authentication of the wireless communication devices can be triggered by the mobile network.

As successive authentications for the same devices can be carried out, the level of confidence of a wireless communication device will advantageously increase with the number of successful authentications. This is due to the fact that for each authentication attempt of a given wireless communication device, possibly different combinations of bits are extracted from the XRES_i as a different RAND value is used to determine the sampling function.

The use of the synthetic AUTHENTICATE commands allow Non-operational network radio resources usage and to reduce battery consumption while enabling a secure mutual authentication between the network and the requesting wireless communication devices.

## Claims

1. A gateway relaying node (201) for the authentication of a group (200) comprising a plurality of wireless communication devices localized in the vicinity of said node (201) and requesting access to a wireless communication network (130), the gateway relaying node (201) being adapted to communicate directly with the requesting wireless communication devices and with the wireless communication network, the gateway relaying node (201) being further adapted to:

   - receive (214, 215) all or part of a synthetic authentication vector (300) generated by an authentication server (203), the synthetic authentication vector (300) being derived from a set of individual authentication vectors, said set comprising one individual authentication vector per requesting wireless communication device belonging to the group (200), an individual authentication vector being determined using a random number RAND generated for registering the whole group (200) of requesting wireless communication devices, the synthetic authentication vector being derived by sampling each individual authentication vector using a sampling function SFm and by concatenating the sampled version of said individual authentication vector, the sampling function SFm being selected depending on the value of the random number RAND, the random number RAND being also transmitted as a part of the synthetic authentication vector;
   - generate (216) a local AUTHENTICATE command for each of the requesting wireless communication devices (200), a local AUTHENTICATE command being composed of the random number RAND and of the bits extracted from the synthetic authentication vector and corresponding to the sampled version of the individual authentication vectors corresponding to the requesting wireless communication devices (200) for which the local AUTHENTICATE command is intended;
   - transmit the local AUTHENTICATE commands (217a, 217b, 217c) to each of the requesting wireless communication devices (200).

2. The gateway relaying node (201) according to Claim 1, wherein it is adapted, before receiving the synthetic authentication vector, to:

- receive a registration request for each (210) of the requesting wireless communication device of the group, a registration request comprising an identifier associated to the requesting wireless communication device to which it is associated;
- transmit (211, 212) to the authentication server (203) the received identifiers, said identifiers being used by the authentication server to retrieve a secret Ki associated to the requesting wireless communication devices of the group, said secret Ki being used as an input to determine the individual authentication vectors.

3. The gateway relaying node (201) according to any of the preceding claims, wherein it is adapted, after having transmitted the local AUTHENTICATION commands (217a, 217b, 217c), to

- receive for each requesting wireless communication device of the group (200) an authentication response comprising a result RES_i determined using a secret accessible from the requesting wireless communication device and from the random number;
- generate a synthetic authentication response RES* by concatenating a sampled version of the results RES_i received from each of the requesting wireless communication devices of the group.

4. The gateway relaying node (201) according to any of the preceding claims being of same type as of the requesting wireless communication devices.

5. The gateway relaying node (201) according to any claims 2 to 4, wherein the identifiers associated to the requested wireless devices are International Mobile Subscriber Identifiers IMSI.

6. The gateway relaying node (201) according to claim 3 and 5, wherein the list of IMSI is by transmitting only the MSIN part in case the MCC and MNC fields are the same for the requesting wireless communication devices of the group.

7. An authentication server (203) adapted to:

- receive a message (212) comprising a list of identifier associated to a group of wireless communication devices, the requesting wireless communication device of this group (200) requesting access to a wireless communication network (130), each of the requesting wireless communication device being associated to an identifier of the list;
- provide a random number RAND generated for this access request for the whole group (200);
- generate a set of individual authentication vectors, said set comprising one individual authentication vector per requesting wireless communication device belonging to the group (200), an individual authentication vector being determined using the random number RAND;
- select a sampling function SFm based on the random number RAND
- generate a synthetic authentication vector by sampling each individual authentication vector using the sampling function SFm and by concatenating the sampled version of said individual authentication vector, the random number RAND being also transmitted as a part of the synthetic authentication vector;
- transmit (214, 215) all or part of the synthetic authentication vector to a gateway relaying node as claimed in claim 1.

8. The authentication server (203) according to claim 7 configured to estimate a level of confidence for each of the requesting wireless communication devices of the group taking into account the increasing number of authentications performed over time for each of them.

9. The authentication server (203) according to any of claims 7 or 8, wherein an individual authentication vector provided for the i-th requesting wireless communication device comprises an authentication token AUTN_i for authenticating the wireless communication network, a sequence number SQN_i and an expected result XRES_i.

10. The authentication server (203) according to claim 9, wherein the synthetic authentication vector is generated by extracting for the i-th requesting wireless communication device at least one bit of AUTN_i, at least one bit of XRES_i and at least one bit of SQN_i for respectively forming AUTN_i**, XRES_i** and SQN_i**, then concatenating the AUTN_i**, XRES_i**, SQN_i** obtained for all the requesting wireless communication devices (200) of the group, then by calculating a hashed value of XRES_i** and adding the random number RAND.

**11.** The authentication server (203) according to claim 10, wherein the at least one bit extracted from SQN_i to form SQN_i** is the at least one near least significant bit of SQN_i, for allowing the i-th requesting wireless communication device to verify SQN_i while receiving only SQN_i** with the assumption that the most significant bits are correct despite not received.

**12.** The authentication server (203) according to any of claims 7 to 11, wherein K bits are extracted (404) from XRES_i*, this extraction being done for all the requesting wireless communication devices (200) of the group and concatenated in order to from a control code named GRN_ControlCodes.

**13.** The authentication server (203) according to claim 12, wherein the control code GRN_ControlCodes is transmitted to the gateway relaying node (201) for enabling it to perform a pre-authentication of the requesting wireless communication devices (200).

**14.** The authentication server (203) according to any of claims 7 to 13 , wherein the synthetic authentication vector is transmitted entirely to an Access and Mobility management Function AMF (202), which memorizes HXRES* and forwards a part of the synthetic authentication vector to the gateway relay node (201), said part comprising AUTN*, SQN* and RAND.

**Patentansprüche**

**1.** Gateway-Weiterleitungsknoten (201) für die Authentifizierung einer Gruppe (200), umfassend eine Vielzahl von drahtlosen Kommunikationsgeräten, die in der Nähe des Knotens (201) lokalisiert ist und Zugriff auf ein drahtloses Kommunikationsnetzwerk (130) anfordert, wobei der Gateway-Weiterleitungsknoten (201) ausgelegt ist, um mit den anfordernden drahtlosen Kommunikationsgeräten und mit dem drahtlosen Kommunikationsnetzwerk direkt zu kommunizieren, wobei der Gateway-Weiterleitungsknoten (201) ferner ausgelegt ist zum:

- Empfangen (214, 215) eines ganzen oder eines Teils eines synthetischen Authentifizierungsvektors (300), der durch einen Authentifizierungsserver (203) erzeugt wird, wobei der synthetische Authentifizierungsvektor (300) aus einem Satz einzelner Authentifizierungsvektoren abgeleitet wird, der Satz umfassend einen einzelnen Authentifizierungsvektor pro anforderndem drahtlosen Kommunikationsgerät, das zu der Gruppe (200) gehört, wobei ein einzelner Authentifizierungsvektor unter Verwendung einer Zufallszahl RAND bestimmt wird, die zum Registrieren der gesamten Gruppe (200) der Anforderung von drahtlosen Kommunikationsgeräten erzeugt wird, wobei der synthetische Authentifizierungsvektor durch ein Abtasten jedes einzelnen Authentifizierungsvektors unter Verwendung einer Abtastfunktion SFm und durch ein Verketten der abgetasteten Version des einzelnen Authentifizierungsvektors abgeleitet wird, wobei die Abtastfunktion SFm in Abhängigkeit von dem Wert der Zufallszahl RAND ausgewählt wird, wobei die Zufallszahl RAND auch als ein Teil des synthetischen Authentifizierungsvektors übertragen wird;
- Erzeugen (216) eines lokalen AUTHENTICATE-Befehls für jedes der anfordernden drahtlosen Kommunikationsgeräte (200), wobei ein lokaler AUTHENTICATE-Befehl aus der Zufallszahl RAND und der von dem synthetischen Authentifizierungsvektor extrahierten Bits zusammengesetzt ist und der abgetasteten Version der einzelnen Authentifizierungsvektoren entspricht, die den anfordernden drahtlosen Kommunikationsgeräten (200) entsprechen, für die der lokale AUTHENTICATE-Befehl vorgesehen ist;
- Übertragen der lokalen AUTHENTICATE-Befehle (217a, 217b, 217c) an jedes der anfordernden drahtlosen Kommunikationsgeräte (200).

**2.** Gateway-Weiterleitungsknoten (201) nach Anspruch 1, wobei dieser, vor dem Empfangen des synthetischen Authentifizierungsvektors, ausgelegt ist zum:

- Empfangen einer Registrierungsanforderung für jedes (210) der anfordernden drahtlosen Kommunikationsgeräte der Gruppe, eine Registrierungsanforderung umfassend eine Kennung, die dem anfordernden drahtlosen Kommunikationsgerät zugeordnet ist, dem sie zugeordnet ist;
- Übertragen (211, 212) der empfangenen Kennungen an den Authentifizierungsserver (203), wobei die Kennungen durch den Authentifizierungsserver verwendet werden, um ein Geheimnis Ki abzurufen, das den anfordernden drahtlosen Kommunikationsgeräten der Gruppe zugeordnet ist, wobei das Geheimnis Ki als eine Eingabe verwendet wird, um die einzelnen Authentifizierungsvektoren zu bestimmen.

**3.** Gateway-Weiterleitungsknoten (201) nach einem der vorstehenden Ansprüche, wobei dieser, nach dem Übertragen der lokalen AUTHENTICATION-Befehle (217a, 217b, 217c), ausgelegt ist zum

- Empfangen, für jedes anfordernde drahtlose Kommunikationsgerät der Gruppe (200), einer Authentifizierungsantwort, die ein Ergebnis RES_i umfasst, das unter Verwendung eines Geheimnisses bestimmt wird, das von dem anfordernden drahtlosen Kommunikationsgerät und von der Zufallszahl zugänglich ist;
- Erzeugen einer synthetischen Authentifizierungsantwort RES* durch das Verketten einer abgetasteten Version der Ergebnisse RES_i, die von jedem der anfordernden drahtlosen Kommunikationsgeräte der Gruppe empfangen werden.

4. Gateway-Weiterleitungsknoten (201) nach einem der vorstehenden Ansprüche, der demselben Typ entspricht wie die anfordernden drahtlosen Kommunikationsgeräte.

5. Gateway-Weiterleitungsknoten (201) nach einem der Ansprüche 2 bis 4, wobei die Kennungen, die den angeforderten drahtlosen Geräten zugeordnet sind, internationale Mobilfunk-Teilnehmerkennungen, IMSI, sind.

6. Gateway-Weiterleitungsknoten (201) nach Anspruch 3 und 5, wobei die Liste der IMSI, indem nur der MSIN-Teil übertragen wird, falls die MCC- und MNC-Felder für die anfordernden drahtlosen Kommunikationsgeräte der Gruppe gleich sind.

7. Authentifizierungsserver (203), der ausgelegt ist zum:

- Empfangen einer Nachricht (212), umfassend eine Liste von Kennungen, die einer Gruppe von drahtlosen Kommunikationsgeräten zugeordnet sind, wobei das anfordernde drahtlose Kommunikationsgerät dieser Gruppe (200) Zugriff auf ein drahtloses Kommunikationsnetzwerk (130) anfordert, wobei jedes der anfordernden drahtlosen Kommunikationsgeräte einer Kennung der Liste zugeordnet ist;
- Bereitstellen einer Zufallszahl RAND, die für diese Zugriffsanforderung für die gesamte Gruppe (200) erzeugt wird;
- Erzeugen eines Satzes einzelner Authentifizierungsvektoren, der Satz umfassend einen einzelnen Authentifizierungsvektor pro anforderndem drahtlosen Kommunikationsgerät, das zu der Gruppe (200) gehört, wobei ein einzelner Authentifizierungsvektor unter Verwendung der Zufallszahl RAND bestimmt wird;
- Auswählen einer Abtastfunktion SFm basierend auf der Zufallszahl RAND
- Erzeugen eines synthetischen Authentifizierungsvektors durch das Abtasten jedes einzelnen Authentifizierungsvektors unter Verwendung der Abtastfunktion SFm und durch das Verketten der abgetasteten Version des einzelnen Authentifizierungsvektors, wobei die Zufallszahl RAND auch als ein Teil des synthetischen Authentifizierungsvektors übertragen wird;
- Übertragen (214, 215) eines ganzen oder eines Teils des synthetischen Authentifizierungsvektors an einen Gateway-Weiterleitungsknoten nach Anspruch 1.

8. Authentifizierungsserver (203) nach Anspruch 7, der konfiguriert ist, um eine Vertrauensstufe für jedes der anfordernden drahtlosen Kommunikationsgeräte der Gruppe unter Berücksichtigung der steigenden Anzahl von Authentifizierungen zu schätzen, die über die Zeit für jedes davon durchgeführt werden.

9. Authentifizierungsserver (203) nach einem der Ansprüche 7 oder 8, wobei ein einzelner Authentifizierungsvektor, der für das i-te anfordernde drahtlose Kommunikationsgerät bereitgestellt wird, ein Authentifizierungstoken AUTN_i zum Authentifizieren des drahtlosen Kommunikationsnetzwerks, eine Sequenznummer SQN_i und ein erwartetes Ergebnis XRES_i umfasst.

10. Authentifizierungsserver (203) nach Anspruch 9, wobei der synthetische Authentifizierungsvektor erzeugt wird, indem für das i-te anfordernde drahtlose Kommunikationsgerät mindestens ein Bit von AUTN_i, mindestens ein Bit von XRES_i und mindestens ein Bit von SQN_i extrahiert wird, um jeweils AUTN_i**, XRES_i** und SQN_i** zu bilden, dann das AUTN_i**, XRES_i**, SQN_i** verkettet wird, das für alle der anfordernden drahtlosen Kommunikationsgeräte (200) der Gruppe erhalten wird, dann ein Hashwert von XRES_i** berechnet und der Zufallszahl RAND hinzugefügt wird.

11. Authentifizierungsserver (203) nach Anspruch 10, wobei das mindestens eine Bit, das von SQN_i extrahiert wird, um SQN_i** zu bilden, das mindestens eine nahezu niedrigstwertige Bit von SQN_i ist, um zu ermöglichen, dass das i-te anfordernde drahtlose Kommunikationsgerät SQN_i verifizieren kann, während nur SQN_i** empfangen wird, unter der Annahme, dass die höchstwertigen Bits korrekt sind, obwohl diese nicht empfangen werden.

**12.** Authentifizierungsserver (203) nach einem der Ansprüche 7 bis 11, wobei K Bits aus XRES_i* extrahiert werden (404), wobei diese Extraktion für alle der anfordernden drahtlosen Kommunikationsgeräte (200) der Gruppe durchgeführt wird, und verkettet werden, um einen Steuercode namens GRN_ControlCodes auszubilden.

**13.** Authentifizierungsserver (203) nach Anspruch 12, wobei der Steuercode GRN_ControlCodes an den Gateway-Weiterleitungsknoten (201) übertragen wird, um zu ermöglichen, eine Vorauthentifizierung der anfordernden drahtlosen Kommunikationsgeräte (200) durchzuführen.

**14.** Authentifizierungsserver (203) nach einem der Ansprüche 7 bis 13, wobei der synthetische Authentifizierungsvektor vollständig an eine Zugriffs- und Mobilitätsverwaltungsfunktion, AMF, (202) übertragen wird, die HXRES* speichert und einen Teil des synthetischen Authentifizierungsvektors an den Gateway-Weiterleitungsknoten (201) weiterleitet, der Teil umfassend AUTN*, SQN* und RAND.

**Revendications**

**1.** Noeud de relais de passerelle (201) pour l'authentification d'un groupe (200) comprenant une pluralité de dispositifs de communication sans fil localisés au voisinage dudit noeud (201) et demandant l'accès à un réseau de communication sans fil (130), le noeud de relais de passerelle (201) étant conçu pour communiquer directement avec les dispositifs de communication sans fil demandeurs et avec le réseau de communication sans fil, le noeud de relais de passerelle (201) étant conçu en outre pour :

- recevoir (214, 215) la totalité ou une partie d'un vecteur d'authentification synthétique (300) généré par un serveur d'authentification (203), le vecteur d'authentification synthétique (300) étant dérivé d'un ensemble de vecteurs d'authentification individuels, ledit ensemble comprenant un vecteur d'authentification individuel par dispositif de communication sans fil demandeur appartenant au groupe (200), un vecteur d'authentification individuel étant déterminé à l'aide d'un nombre aléatoire RAND généré pour l'enregistrement du groupe entier (200) de dispositifs de communication sans fil demandeurs, le vecteur d'authentification synthétique étant dérivé par échantillonnage de chaque vecteur d'authentification individuel à l'aide d'une fonction d'échantillonnage SFm et par concaténation de la version échantillonnée dudit vecteur d'authentification individuel, la fonction d'échantillonnage SFm étant sélectionnée en fonction de la valeur du nombre aléatoire RAND, le nombre aléatoire RAND étant également transmis dans le cadre du vecteur d'authentification synthétique ;
- générer (216) une instruction AUTHENTICATE locale pour chacun des dispositifs de communication sans fil demandeurs (200), une instruction AUTHENTICATE locale étant composée du nombre aléatoire RAND et des bits extraits du vecteur d'authentification synthétique et correspondant à la version échantillonnée des vecteurs d'authentification individuels correspondant aux dispositifs de communication sans fil demandeurs (200) pour lesquels l'instruction AUTHENTICATE locale est prévue ;
- transmettre les instructions AUTHENTICATE locales (217a, 217b, 217c) à chacun des dispositifs de communication sans fil demandeurs (200).

**2.** Noeud de relais de passerelle (201) selon la revendication 1, étant conçu, avant réception du vecteur d'authentification synthétique, pour :

- recevoir une demande d'enregistrement pour chacun (210) des dispositifs de communication sans fil demandeurs du groupe, une demande d'enregistrement comprenant un identificateur associé au dispositif de communication sans fil demandeur auquel elle est associée ;
- transmettre (211, 212) au serveur d'authentification (203) les identificateurs reçus, lesdits identificateurs étant utilisés par le serveur d'authentification pour récupérer un secret Ki associé aux dispositifs de communication sans fil demandeurs du groupe, ledit secret Ki étant utilisé en guise d'entrée pour déterminer les vecteurs d'authentification individuels.

**3.** Noeud de relais de passerelle (201) selon l'une quelconque des revendications précédentes, étant conçu, après avoir transmis les instructions AUTHENTICATION locales (217a, 217b, 217c), pour

- recevoir pour chaque dispositif de communication sans fil demandeur du groupe (200) une réponse d'authentification comprenant un résultat RES_i déterminé à l'aide d'un secret accessible à partir du dispositif de communication sans fil demandeur et à partir du nombre aléatoire ;
- générer une réponse d'authentification synthétique RES* par concaténation d'une version échantillonnée du résultat RES_i reçu de chacun des dispositifs de communication sans fil demandeurs du groupe.

4. Noeud de relais de passerelle (201) selon l'une quelconque des revendications précédentes étant du même type que celui des dispositifs de communication sans fil demandeurs.

5. Noeud de relais de passerelle (201) selon de quelconques revendications 2 à 4, dans lequel les identificateurs associés aux dispositifs sans fil demandés sont des identificateurs internationaux d'abonnés mobiles IMSI.

6. Noeud de relais de passerelle (201) selon la revendication 3 et 5, dans lequel la liste d'IMSI se fait en transmettant uniquement la partie MSIN dans un cas où les champs MCC et MNC sont identiques pour les dispositifs de communication sans fil demandeurs du groupe.

7. Serveur d'authentification (203) conçu pour :

- recevoir un message (212) comprenant une liste d'identificateurs associés à un groupe de dispositifs de communication sans fil, le dispositif de communication sans fil demandeur de ce groupe (200) demandant un accès à un réseau de communication sans fil (130), chacun des dispositifs de communication sans fil demandeurs étant associé à un identificateur de la liste ;
- fournir un nombre aléatoire RAND généré pour cette demande d'accès pour le groupe entier (200) ;
- générer un ensemble de vecteurs d'authentification individuels, ledit ensemble comprenant un vecteur d'authentification individuel par dispositif de communication sans fil demandeur appartenant au groupe (200), un vecteur d'authentification individuel étant déterminé à l'aide du nombre aléatoire RAND ;
- sélectionner une fonction d'échantillonnage SFm en fonction du nombre aléatoire RAND
- générer un vecteur d'authentification synthétique par échantillonnage de chaque vecteur d'authentification individuel à l'aide de la fonction d'échantillonnage SFm et par concaténation de la version échantillonnée dudit vecteur d'authentification individuel, le nombre aléatoire RAND étant également transmis dans le cadre du vecteur d'authentification synthétique ;
- transmettre (214, 215) la totalité ou une partie du vecteur d'authentification synthétique à un noeud de relais de passerelle selon la revendication 1.

8. Serveur d'authentification (203) selon la revendication 7 configuré pour estimer un niveau de confiance pour chacun des dispositifs de communication sans fil demandeurs du groupe en tenant compte du nombre croissant d'authentifications mises en oeuvre au fil du temps pour chacun d'entre eux.

9. Serveur d'authentification (203) selon l'une quelconque des revendications 7 ou 8, dans lequel un vecteur d'authentification individuel fourni pour le i-ème dispositif de communication sans fil demandeur comprend un jeton d'authentification AUTN_i permettant d'authentifier le réseau de communication sans fil, un numéro de séquence SQN_i et un résultat attendu XRES_i.

10. Serveur d'authentification (203) selon la revendication 9, dans lequel le vecteur d'authentification synthétique est généré par extraction pour le i-ème dispositif de communication sans fil demandeur d'au moins un bit d'AUTN_i, d'au moins un bit de XRES_i et d'au moins un bit de SQN_i pour former respectivement AUTN_i**, XRES_i** et SQN_i**, puis concaténation des AUTN_i**, XRES_i**, SQN_i** obtenus pour tous les dispositifs de communication sans fil demandeurs (200) du groupe, puis par calcul d'une valeur de hachage de XRES_i** et ajout du nombre aléatoire RAND.

11. Serveur d'authentification (203) selon la revendication 10, dans lequel l'au moins un bit extrait de SQN_i pour former SQN_i** est au moins un bit de moindre signification proche de SQN_i, pour permettre au i-ème dispositif de communication sans fil demandeur de vérifier SQN_i tout en recevant uniquement SQN_i** avec l'hypothèse que les bits les plus significatifs sont corrects bien qu'ils n'aient pas été reçus.

12. Serveur d'authentification (203) selon l'une quelconque des revendications 7 à 11, dans lequel K bits sont extraits (404) de XRES_i*, cette extraction étant réalisée pour tous les dispositifs de communication sans fil demandeurs (200) du groupe, et concaténés afin de former un code de commande nommé GRN_ControlCodes.

13. Serveur d'authentification (203) selon la revendication 12, dans lequel le code de commande GRN_ControlCodes est transmis au noeud de relais de passerelle (201) pour lui permettre de mettre en oeuvre une pré-authentification des dispositifs de communication sans fil demandeurs (200).

**14.** Serveur d'authentification (203) selon l'une quelconque des revendications 7 à 13, dans lequel le vecteur d'authentification synthétique est transmis entièrement à une fonction de gestion d'accès et de mobilité AMF (202), qui mémorise HXRES* et achemine une partie du vecteur d'authentification synthétique au noeud de relais de passerelle (201), ladite partie comprenant ALITN*, SQN* et RAND.

**Fig. 1**

Fig. 2

Fig. 3

RAND ⟶ CREATE SFm ( ) ⟋400

XRES & AUTN SAMPLING ⟋401

SQN TRUNCATION ⟋402

SAMPLES CONCATENATION
(H)XRES*, AUTN*, SQN* ⟋403

GNR_Control Codes ⟋404

AUTHENTICATE COMMAND
TRANSMISSION ⟋405

# Fig. 4

START

CHECK SQN_i** — 500

COMPUTE RES_i — 501

RAND → GENERATE SFm — 502

COMPUTE AUTN_i — 503

CHECK AUTN_i** — 504

505 — SUCCESS ? — NO

YES

TRANSMIT RES_i to GNR — 506

END

# Fig. 5

```
              ┌──────────────────┐
              ║      START       ║
              └──────────────────┘
                       │
                       ▼
         ┌──────────────────────────┐
         │ SQN_i** AND AUTN_i**      │── 600
         │ VERIFICATION FOR GRN      │
         └──────────────────────────┘
                       │
                       ▼
         ┌──────────────────────────┐
         │ CHECK RES_i IN VIEW       │── 601
         │ OF GRN_Control Codes      │
         └──────────────────────────┘
                       │
                       ▼
            602 ──    ◇                 NO (for at least one i)
                   ◇   ◇───────────────────────────────┐
                  ◇ SUCCESS ◇                           │      605
                   ◇       ◇                            │       │
                    ◇     ◇                             ▼
                       │ YES                    ┌───────────────┐
                       │                        │  BLACK LIST   │
 RAND ─────▶ ┌──────────────────┐               └───────────────┘
             │  GENERATE SFm     │                       │
             └──────────────────┘── 603                  │
                       │                                 │
                       ▼                                 │
         ┌──────────────────────────┐ ── 604             │
         │ RES* GENERATION           │                    │
         │ AND TRANSMISSION          │                    │
         └──────────────────────────┘                    │
                       │           ◀────────────────────┘
                       ▼
              ┌──────────────────┐
              ║      END         ║
              └──────────────────┘
```

## Fig. 6

```
        ┌──────────────┐
        │║   START    ║│
        └──────┬───────┘
               │
               ▼
        ┌──────────────┐
        │  CHECK RES*  │  ⟋700
        └──────┬───────┘
               │
               ▼
   701⟋    ◇◇◇◇◇◇◇◇
          ◇ SUCCESS ◇    NO                    703
          ◇    ?    ◇──────────────────┐    ⟋
           ◇◇◇◇◇◇◇◇                    ▼
               │ YES              ┌──────────┐
               ▼                  │ FAILURE  │
        ┌──────────────┐          └────┬─────┘
        │RES* TRANSMISSION│ ⟋702        │
        │   TO AUSF    │               │
        └──────┬───────┘               │
               ◄──────────────────────┘
               │
               ▼
        ┌──────────────┐
        │║    END     ║│
        └──────────────┘
```

# Fig. 7

START

CHECK RES* ⌐800

801⌐ SUCCESS ? NO ⌐803

YES

AUTHORIZE ACCESS ⌐802

FAILURE OF BULK AUTH

END

# Fig. 8

**EP 3 884 635 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018115539 A1
- WO 2016171618 A1
- US 2013291071 A1